# EUROPÄISCHE PATENTANMELDUNG

(11) **EP 4 136 956 A1**
(43) Veröffentlichungstag der Anmeldung: **22.02.2023**
(21) Anmeldenummer: 22173955.0
(22) Anmeldetag: 18.05.2022
(51) Int. Cl.: A01D 41/127, A01D 41/14, A01D 57/04

(54) **VERFAHREN FÜR DEN BETRIEB EINER SELBSTFAHRENDEN LANDWIRTSCHAFTLICHEN ERNTEMASCHINE SOWIE SELBSTFAHRENDE LANDWIRTSCHAFTLICHE ERNTEMASCHINE**

(30) Priorität: 17.08.2021 DE 102021121296
(71) Anmelder: CLAAS Selbstfahrende Erntemaschinen GmbH, 33428 Harsewinkel (DE)
(72) Erfinder: Spiekermann, Sebastian, 48346 Ostbevern (DE); Irmer, Daniel, 33442 Herzebock-Clarholz (DE); Neitemeier, Dennis, 59510 Lippetal (DE); Bormann, Bastian, 33334 Gütersloh (DE); Baumgarten, Joachim, 48361 Beelen (DE); Wilken, Andreas, 49143 Bissendorf (DE)
(74) Vertreter: CLAAS Gruppe

(57) **Zusammenfassung**

Die vorliegende Erfindung betrifft ein Verfahren für den Betrieb einer landwirtschaftlichen Erntemaschine (1) mit einem Schneidwerk (2), wobei ein der Erntemaschine (1) zugeordnetes Fahrerassistenzsystem (4) mit einem Speicher (5) zum Hinterlegen von Daten und einer Recheneinheit (6) zur Verarbeitung von im Speicher (5) hinterlegten Daten verwendet wird, wobei das Fahrerassistenzsystem (4) zusammen mit dem Schneidwerk (2) einen Schneidwerksautomaten (8) bildet, indem aus mehreren in dem Speicher (5) hinterlegten Ernteprozessstrategien (5a) eine Ernteprozessstrategie (5a) ausgewählt wird und durch die Recheneinheit (6) zur Umsetzung der ausgewählten Ernteprozessstrategie (5a) mindestens einen Schneidwerksparameter (2a - 2e) autonom ermittelt und dem Schneidwerk (1) vorgeben wird, wobei bei der Ansteuerung des Schneidwerks (1) gemäß der ausgewählten Ernteprozessstrategie (5a) durch den aktiven Schneidwerksautomaten (8) bei einer Detektion einer Ernteprozesssituation auf einem zu bearbeitenden Feld (25), in der eine von der zumindest einen Ernteprozessstrategie (5a) abweichende Regelung erforderlich wird, die Ausführung der Ernteprozessstrategie (5a) durch die Ausführung von einer in dem Speicher (5) hinterlegten Regelsequenzen (5c) temporär übersteuert wird.

## Beschreibung

Die vorliegende Erfindung betrifft ein Verfahren für den Betrieb einer selbstfahrenden landwirtschaftlichen Erntemaschine gemäß dem Oberbegriff des Anspruches 1 sowie eine selbstfahrende landwirtschaftliche Erntemaschine gemäß dem Oberbegriff des Anspruches 14.

Bei einer selbstfahrenden landwirtschaftlichen Erntemaschine handelt es sich insbesondere um einen Mähdrescher oder einen Feldhäcksler.

Aus der DE 10 2015 113 527 A1 ist ein Verfahren für den Betrieb einer selbstfahrenden landwirtschaftlichen Erntemaschine gemäß dem Oberbegriff des Anspruches 1 sowie eine selbstfahrende landwirtschaftliche Erntemaschine bekannt. Der DE 10 2015 113 527 A1 liegt zugrunde, dass ein zu regelndes Schneidwerk der Erntemaschine zusammen mit einem Fahrerassistenzsystem einen Schneidwerksautomaten bildet. Das Fahrerassistenzsystem weist einen Speicher zum Hinterlegen von Daten und eine Recheneinheit auf, welche dazu eingerichtet ist, einzelne Schneidwerksparameter des Schneidwerks autonom zu ermitteln und dem Schneidwerk vorzugeben. Die Basis für die Ermittlung der Schneidwerksparameter bildet eine benutzerseitige Auswahl von Ernteprozessstrategien, die in dem Speicher des Fahrerassistenzsystems hinterlegt sind. Dem Schneidwerksautomaten kommt die Aufgabe zu, das Schneidwerk auf die sich kontinuierlich wechselnden Bestandsbedingungen im abzuerntenden Bestand anzupassen, wobei hierzu die Bestandhöhe und das Bestandvolumen sowie Erntegutparameter des Bestands, wie Erntegutart oder Feuchtigkeit, im Vordergrund stehen. Die auswählbaren Ernteprozessstrategien sind jeweils auf die Zielvorgabe der Einstellung oder der Optimierung mindestens eines Ernteprozessparameters wie "Schnittährenverluste", "Spritzkörnerverluste", "Gleichmäßigkeit Querverteilung Erntegutstrom", "Zeitliche Varianz Erntegutstrom", "Abscheideverluste", "Reinigungsverluste", "Kraftstoffverbrauch" durch eine entsprechende Vorgabe von Schneidwerksparametern wie "Schneidtischlänge" oder "Ausfahrwinkel Einzugsfinger" gerichtet. Es findet bereits eine umfassende Regelung des Schneidwerks in standardisierten Ernteprozesssituationen, die sich an der Bestandhöhe und dem Bestandvolumen sowie den Erntegutparameter des Bestands orientiert, durch den Schneidwerksautomaten statt, die eine Bedienperson der Erntemaschine entlastet bzw. unterstützt.

Ausgehend von dem Stand der Technik besteht die Aufgabe der Erfindung darin, ein aus dem Stand der Technik bekanntes Verfahren für den Betrieb einer selbstfahrenden landwirtschaftlichen Erntemaschine sowie eine landwirtschaftliche Erntemaschine so weiterzuentwickeln, dass automatisiert auf eine Ernteprozesssituation auf einem zu bearbeitenden Feld reagiert werden kann, die von einer standardisierten Ernteprozesssituation abweicht.

Die vorstehende Aufgabe wird aus verfahrenstechnischer Sicht von einem Verfahren gemäß dem Oberbegriff des Anspruches 1 durch dessen kennzeichnenden Merkmale gelöst. Aus vorrichtungstechnischer Sicht wird die Aufgabe durch eine selbstfahrende landwirtschaftliche Erntemaschine gemäß dem Oberbegriff des Anspruches 14 durch dessen kennzeichnenden Merkmale gelöst. Vorteilhafte Weiterbildungen und Ausführungsformen sind Gegenstand der hiervon abhängigen Unteransprüche.

Gemäß dem Anspruch 1 wird ein Verfahren für den Betrieb einer selbstfahrenden landwirtschaftlichen Erntemaschine mit einem Schneidwerk zum Schneiden und Aufnehmen von Erntegut vorgeschlagen, wobei ein der Erntemaschine zugeordnetes Fahrerassistenzsystem mit einem Speicher zum Hinterlegen von Daten und einer Recheneinheit zur Verarbeitung von im Speicher hinterlegten Daten verwendet wird, wobei das Fahrerassistenzsystem zusammen mit dem Schneidwerk einen Schneidwerksautomaten bildet, indem aus mehreren in dem Speicher hinterlegten Ernteprozessstrategien zumindest eine Ernteprozessstrategie ausgewählt wird und durch die Recheneinheit zur Umsetzung der zumindest einen ausgewählten Ernteprozessstrategie mindestens einen Schneidwerksparameter autonom ermittelt und dem Schneidwerk vorgeben wird. Erfindungsgemäß ist vorgesehen, dass bei der Ansteuerung des Schneidwerks gemäß der zumindest einen ausgewählten Ernteprozessstrategie durch den aktiven Schneidwerksautomaten in Abhängigkeit bei einer Detektion einer Ernteprozesssituation auf einem zu bearbeitenden Feld, in der eine von der zumindest einen Ernteprozessstrategie abweichende Regelung erforderlich wird, die Ausführung der Ernteprozessstrategie durch die Ausführung von einer in dem Speicher hinterlegten Regelsequenzen temporär übersteuert wird. Wesentlich für die Erfindung ist, dass eine für die spezifische Ernteprozesssituation von der zumindest einen ausgewählten Ernteprozessstrategie abweichende Regelung automatisch angewandt wird, die in entsprechenden Regelsequenzen hinterlegt ist, deren temporäre Ausführung in einer spezifischen Ernteprozesssituation zu einem optimaleren Ergebnis führt, als dies bei der Ausführung der zumindest einen ausgewählten Ernteprozessstrategie der Fall wäre. Um die Bedienperson in solch einer spezifischen Ernteprozesssituation zu entlasten und aus einer solchen spezifischen Ernteprozesssituation möglicherweise entstehende Gutstauungen oder Verluste präventiv zu vermeiden, analysiert der Schneidwerksautomat die bestehende Ernteprozesssituation der Erntemaschine und löst erforderlichenfalls die für die detektierte spezifische Ernteprozesssituation entsprechende Regelsequenz aus. Dadurch werden von dem Schneidwerksautomaten gemäß der zumindest einen ausgewählten Ernteprozessstrategie vorgenommene Einstellungen von Schneidwerksparametern des Schneidwerks temporär übersteuernd verstellt. Mit der Begrifflichkeit "temporär übersteuernd" ist gemeint, dass die Ausführung der Regelsequenz auf einen Zeitraum und/oder einen Fahrweg beschränkt ist, der sich aus dem zu detektierenden Beginn der spezifischen Ernteprozesssituation und dem zu detektierenden Ende der spezifischen Ernteprozesssituation ergibt. Besonders vorteilhaft ist, dass durch die Regelsequenz gleichzeitig mehrere Komponenten des Schneidwerks angesteuert werden können, was bei einer manuellen Einstellung respektive Übersteuerung des Schneidwerksautomaten durch die Bedienperson nicht darstellbar ist.

Insbesondere kann als eine Ernteprozesssituation eine Bestandseinfahrt, eine Fahrt mit einer Spritzspur im Bestand, eine Bestandsausfahrt oder eine Fahrt im Vorgewende detektiert werden. Bei einer Bestandseinfahrt kann der Bestand aufgrund der Einstellung gemäß der zumindest einen ausgewählten Ernteprozessstrategie zu spät eingezogen werden, was Erntegutverluste zur Folge haben kann. Bei einer Fahrt mit einer oder mehreren Spritzspuren im Bestand als Ernteprozesssituation kann es aufgrund der Einstellung gemäß der zumindest einen ausgewählten Ernteprozessstrategie im Bereich der Spritzspuren zu Stauungen im Schneidwerk kommen. Bei einer Bestandsausfahrt kann das Fehlen von Bestand hinter dem zuletzt abzuerntenden Erntegut dazu führen, dass das Erntegut nach vorne, d.h. in Fahrtrichtung der Erntemaschine, fällt und somit aufgrund der Einstellung gemäß der zumindest einen ausgewählten Ernteprozessstrategie möglicherweise nicht von dem Schneidwerk aufgenommen werden kann, was zu Erntegutverlusten führt. Bei einer Fahrt im Vorgewende kann in Abhängigkeit von der Einstellung gemäß der zumindest einen ausgewählten Ernteprozessstrategie abgeschnittenes Erntegut im Schneidwerk verbleiben, ohne von der Einzugsschnecke erfasst zu werden, und während der Fahrt im Vorgewende vom Schneidwerk fallen, was entsprechend zu Erntegutverlusten führt. Diese spezifischen Ernteprozesssituationen lösen erfindungsgemäß zur Vermeidung der vorstehend beschriebenen Nachteile die Ausführung einer entsprechenden Regelsequenz aus.

Bevorzugt können durch den Schneidwerksautomaten respektive das Fahrerassistenzsystem Haspel, Messerbalken, Schneidtisch, Einzugsschnecke und/oder Förderbänder als Komponenten des Schneidwerks durch Einstellung der zugehörigen Schneidwerksparameter "Messerbalkenhöhe", "Schnittwinkel", "Schneidtischlänge", "horizontale Haspelposition", "vertikale Haspelposition" "Drehzahl Haspel", "Schnittfrequenz", "Höhe Einzugsschnecke", "Bandgeschwindigkeit" angesteuert werden. Die Ansteuerung erfolgt dabei gemäß der zumindest einen ausgewählten Ernteprozessstrategie und wird in Abhängigkeit von der detektierten Ernteprozesssituation durch die Regelsequenz temporär übersteuert.

Hierzu kann bei der Ernteprozesssituation Bestandseinfahrt eine Regelsequenz ausgeführt werden, durch welche abweichend von der Einstellung durch den Schneidwerksautomaten gemäß der zumindest einen ausgewählten Ernteprozessstrategie der Schneidwerksparameter "vertikale Haspelposition" angesteuert wird, um die Haspel tiefer zu stellen. Dadurch wird erreicht, dass das zu Beginn einer Fahrspur vorne stehende Erntegut früher von der Haspel erfasst und eingezogen wird.

Weiterhin kann bei der Ernteprozesssituation Fahrt mit einer Spritzspur eine Regelsequenz ausgeführt werden, durch welche abweichend von den Einstellungen durch den Schneidwerksautomaten gemäß der zumindest einen ausgewählten Ernteprozessstrategie die Schneidwerksparameter "vertikale Haspelposition" und "Schneidtischlänge" angesteuert werden, um die Haspel zyklisch tiefer zu stellen und zugleich die Ausfahrlänge des Schneidtisches zu reduzieren. Mit zyklisch ist das wiederholte Verstellen der vertikalen Haspelposition innerhalb eines definierten Zeitraums und/oder eines Fahrweges gemeint. Das zeitliche oder nahezu zeitgleiche verändern der Ausfahrlänge des Schneidtisches bewirkt im Zusammenspiel mit der zyklischen Tieferstellung der Haspel, dass auftretende Gutflussstauungen im Schneidwerk im Bereich der Spritzspur gelöst oder das Auftreten von Gutflussstauungen präventiv vermieden werden können. Insbesondere kann bei der Ernteprozesssituation Bestandsausfahrt eine Regelsequenz ausgeführt werden, durch welche abweichend von der Einstellung durch den Schneidwerksautomaten gemäß der zumindest einen ausgewählten Ernteprozessstrategie der Schneidwerksparameter "vertikale Haspelposition" angesteuert wird, um die Haspel abzusenken. Dadurch wird erreicht, dass das am äußersten Rand des Bestands am Ende einer Fahrspur stehende Erntegut von der abgesenkten Haspel zumindest erfasst und eingezogen wird, bevor das Erntegut vom Messerbalken abgeschnitten wird.

Des Weiteren kann bei der Ernteprozesssituation Fahrt im Vorgewende eine Regelsequenz ausgeführt werden, durch welche abweichend von den Einstellungen durch den Schneidwerksautomaten gemäß der zumindest einen ausgewählten Ernteprozessstrategie die Schneidwerksparameter "horizontale Haspelposition" und "Schneidtischlänge" angesteuert werden, um die Haspel abzusenken und anschließend die Ausfahrlänge der Haspel zeitgleich mit der Ausfahrlänge des Schneidtisches zu verringern. Durch das Absenkender Haspel und das anschließende gleichzeitige Verringern der Ausfahrlänge der Haspel und der Ausfahrlänge des Schneidtisches bewirkt eine Reinigung des Schneidwerkes, indem auf dem Schneidtisch verbliebenes Erntegut nach dem Verlassen des Bestands der Einzugsschnecke zugeführt werden kann, um dann in die Erntemaschine gefördert zu werden. Insbesondere kann die durch die Regelsequenz ausgelöste Übersteuerung zur Reinigung vor einer neuerlichen Bestandseinfahrt beendet werden. Die Haspel und der Schneidtisch können entsprechend der zumindest einen Ernteprozessstrategie in ihre vorgesehene Arbeitsposition zurückgeführt werden.

Insbesondere können zur Detektion einer Ernteprozesssituation, welche die Ausführung einer der Regelsequenzen bewirkt, Vorfeldinformationen und maschinenspezifische Parameter durch zumindest eine Sensoranordnung erfasst werden.

Bevorzugt können als Vorfeldinformationen eine Bestandhöhe, eine Bestandskante, ein Erreichen des Bestands bei der Bestandseinfahrt und ein Verlassen des Bestandes bei der Bestandsausfahrt bestimmt und als maschinenspezifische Parameter eine eingestellte Schneidwerkshöhe, eine Schichthöhe in einer dem Schneidwerk nachgeordneten Fördervorrichtung, ein Lenkwinkel, eine Fahrgeschwindigkeit sowie ein eingestellter Lenkmodus zur Spurführung durch das Fahrerassistenzsystem erfasst werden.

Dabei kann zur Steuerung oder Regelung der Spurführung im jeweiligen Lenkmodus die Bestandskante oder eine Spritzspur als Regelgröße verwendet werden.

Gemäß einer Weiterbildung kann das Fahrerassistenzsystem eine Sensoranordnung zur Erzeugung von Vorfeldinformationen aufweisen, wobei die Sensoranordnung ein laserbasiertes Sensorsystem aufweist, das zur Erzeugung von Abstandsinformationen zu einem vorbestimmten, relevanten Vorfeldbereich der Erntemaschine den Vorfeldbereich mit in mehreren Scan-Ebenen verlaufenden elektromagnetischen Sendestrahlen abtastet, wobei von dem laserbasierten Sensorsystem für die Scan-Ebenen aus den Abstandsinformationen jeweils eine Auftrefflinie errechnet wird und aus der Anordnung und/oder Formgebung der den Scan-Ebenen zugeordneten Auftrefflinien auf die dreidimensionale Beschaffenheit des Vorfeldbereichs geschlossen wird. Dabei sind zumindest drei Scanebenen vorgesehen. Besonders bevorzugt sind mehr Scanebenen vorgesehen, um auf die dreidimensionale Beschaffenheit des Vorfeldbereichs schließen zu können.

Insbesondere kann das laserbasierte Sensorsystem im Vorfeldbereich abgeernteten Bestand, stehenden Bestand, einen Übergang vom stehenden Bestand ins Vorgewende oder vom Vorgewende in einen stehenden Bestand erkennen.

Gemäß einer Weiterbildung kann vorgesehen sein, dass die Detektion einer Ernteprozesssituation zur Ansteuerung anderer Arbeitsaggregate der Erntemaschine verwendet wird. Dabei kann den anderen Arbeitsaggregaten der Erntemaschine jeweils ein dezentrales Steuersystem zugeordnet sein.

Insbesondere können durch die ausgeführte Regelsequenz mehrere Arbeitsaggregate der Erntemaschine angesteuert werden. Die Ausführung einer Regelsequenz hat den Vorteil, dass mehrere Arbeitsaggregate der Erntemaschine gleichzeitig und aufeinander abgestimmt angesteuert werden können, was eine Bedienperson der Erntemaschine durch manuell nicht leisten kann.

Die eingangs gestellte Aufgabe wird zudem durch eine selbstfahrende landwirtschaftliche Erntemaschine mit den Merkmalen des nebengeordneten Anspruchs 14 gelöst.

Gemäß dem Anspruch 14 wird eine selbstfahrende landwirtschaftliche Erntemaschine vorgeschlagen, mit einem Schneidwerk zum Schneiden und Aufnehmen von Erntegut und mit einem Fahrerassistenzsystem, welches einen Speicher zum Hinterlegen von Daten und eine Recheneinheit zur Verarbeitung von in dem Speicher hinterlegten Daten aufweist, wobei das Fahrerassistenzsystem zusammen mit dem Schneidwerk einen Schneidwerksautomaten bildet, indem durch Auswahl zumindest einer Ernteprozessstrategie aus mehreren in dem Speicher hinterlegten Ernteprozessstrategien und durch die Recheneinheit, die dazu eingerichtet ist, zur Umsetzung der zumindest einen ausgewählten Ernteprozessstrategie mindestens einen Schneidwerksparameter autonom zu ermitteln und dem Schneidwerk vorzugeben, wobei die Recheneinheit dazu eingerichtet ist, bei der Ausführung der zumindest einen ausgewählten Ernteprozessstrategie durch den aktiven Schneidwerksautomaten bei einer Detektion einer Ernteprozesssituation auf einem zu bearbeitenden Feld, in der eine von der zumindest einen Ernteprozessstrategie abweichende Regelung erforderlich ist, die Ausführung der Ernteprozessstrategie durch die Ausführung von einer in dem Speicher hinterlegten Regelsequenzen temporär zu übersteuern.

Insbesondere kann die selbstfahrende landwirtschaftliche Erntemaschine zur Durchführung des Verfahrens nach einem der Ansprüche 1 bis 13 eingerichtet sein. Auf die Vorteile des erfindungsgemäßen Verfahrens darf verwiesen werden.

Die vorliegende Erfindung wird nachstehend anhand eines in den Zeichnungen dargestellten Ausführungsbeispieles näher erläutert.

Es zeigen:
- Fig. 1: eine Seitenansicht einer als Mähdrescher ausgeführten Erntemaschine;
- Fig. 2: eine schematische Darstellung eines Fahrerassistenzsystems der Erntemaschine;
- Fig. 3: beispielhaft die Erntemaschine in einer Seitenansicht im abgeernteten Bestand; und
- Fig. 4: ein vereinfachtes Flussdiagramm zur Veranschaulichung des vorschlagsgemäßen Verfahrens.

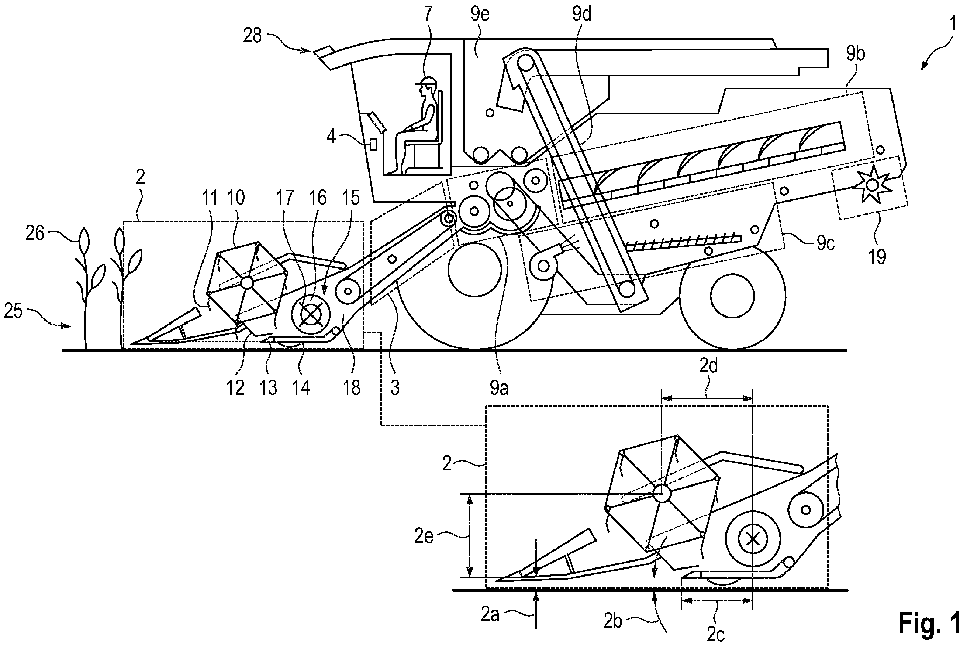

In Fig. 1 ist eine Seitenansicht einer als Mähdrescher ausgeführten selbstfahrenden landwirtschaftlichen Erntemaschine 1 dargestellt. Die Erntemaschine 1 weist ein als Erntevorsatz ausgebildetes Schneidwerk 2 zum Schneiden und Aufnehmen von Erntegut auf. Das Schneidwerk 2 ist vorzugsweise austauschbar gegen ein anderes Schneidwerk 2, so dass die Erntemaschine 1 an das Ernten unterschiedlicher Fruchtarten angepasst werden kann. Unter Erntegut ist dabei das gesamte vom Feldbestand über das Schneidwerk 2 aufgenommene Material zu verstehen. Wie in Fig. 1 zu erkennen ist, wird ein stehender Feldbestand 26 auf einem abzuerntenden Feld 25 durch das Schneidwerk 2 gemäht und das somit gewonnene Erntegut einem Schrägförderer 3 zugeführt.

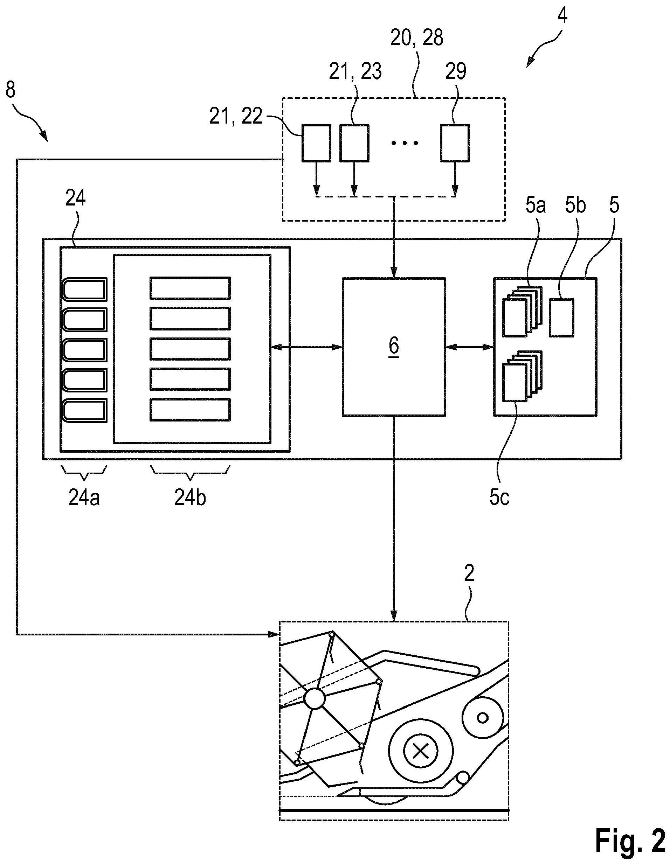

Die Erntemaschine 1 weist ferner ein Fahrerassistenzsystem 4 zur Ansteuerung des Schneidwerks 2 auf. Dieses Fahrerassistenzsystem 4 umfasst einen Speicher 5 zum Hinterlegen von Daten und eine Recheneinheit 6 zur Verarbeitung der in dem Speicher 5 hinterlegten Daten. Grundsätzlich ist das Fahrerassistenzsystem 4 dazu eingerichtet, einer Bedienperson 7 der Erntemaschine 1 bei der Bedienung der Erntemaschine 1 zu unterstützen. Das Fahrerassistenzsystem 4 mit dem Speicher 5 und der Recheneinheit 6 ist schematisch in Fig. 2 gezeigt.

Das Schneidwerk 2 bildet zusammen mit dem Fahrerassistenzsystem 4 einen Schneidwerksautomaten 8. Dieser ist dadurch realisiert, dass im Speicher 5 eine Mehrzahl auswählbarer Ernteprozessstrategien 5a hinterlegt sind und dass die Recheneinheit 6 dazu eingerichtet ist, zur Umsetzung der ausgewählten Ernteprozessstrategie 5a bzw. der Ernteprozessstrategien 5a mindestens einen Schneidwerksparameter für das Schneidwerk 2 autonom zu ermitteln und dem Schneidwerk 2 vorzugeben.

Es handelt sich bei der Ermittlung der Schneidwerksparameter um eine autonome Ermittlung insoweit, dass prinzipiell die zumindest eine ausgewählte Ernteprozessstrategie 5a durch die Recheneinheit 6 umgesetzt wird, ohne dass bei der Ermittlung der Schneidwerksparameter im engeren Sinne ein Eingreifen der Bedienperson 7 oder eine Rückfrage an die Bedienperson 7 nötig ist. Ein solches Eingreifen der Bedienperson 7 ist demnach weiterhin prinzipiell möglich, aber nicht erforderlich. Dabei unterscheiden sich die hinterlegten Ernteprozessstrategien 5a in der Zielvorgabe der Einstellung oder der Optimierung von Ernteprozessparametern.

Bei dem dargestellten und insoweit bevorzugten Ausführungsbeispiel ist die Erntemaschine 1 als selbstfahrender Mähdrescher ausgestaltet. Entsprechend ist dem Schneidwerk 2 ein Dreschwerk 9a zum Dreschen von aufgenommenem Erntegut nachgeschaltet. Dem Dreschwerk 9a ist eine Abscheideanordnung 9b prozesstechnisch nachgelagert. Der dem Dreschwerk 9a zugeführte Erntegutstrom wird im Anschluss - ohne das bereits hier gewonnene Korngut - der Abscheideanordnung 9b zugeführt. In der Abscheideanordnung 9b wird das im Erntegut verbliebene Korngut möglichst aus dem Stroh und den sonstigen Nichtkornbestandteilen abgeschieden. Das im Dreschwerk 9a und der Abscheideanordnung 9b gewonnene Korngut wird dann einer Reinigungsanordnung 9c zugeführt. In der Reinigungsanordnung 9c werden dann noch bis hierher im Korngut mitgeführte Nichtkornbestandteile von dem Korngut getrennt. Anschließend gelangt das gereinigte Korngut mittels eines Kornelevators 9d in einen Korntank 9e. Das ausgedroschene Stroh - also das verbliebene Erntegut in der Abscheideanordnung 9b - wird von der Erntemaschine 1 abgelegt, z. B. als Schwad entlang der Fahrspur.

Das Schneidwerk 2 der dargestellten Erntemaschine 1 weist eine quer zur Fahrtrichtung der Erntemaschine 1 verlaufende Haspel 10 auf, die über daran angeordnete Zinken 11 bereits auf das noch ungeschnittene Erntegut einwirkt. Die Haspel 10 hat in erster Linie die Aufgabe, das Erntegut einem Messerbalken 12, der ein bewegliches Messer 13 aufweist, zuzuführen. Das Messer 13 oszilliert mit einer Schnittfrequenz, so dass das Erntegut geschnitten wird und auf einen längenveränderlichen Schneidtisch 14 fällt, an dessen Vorderseite sich der Messerbalken 12 befindet. Anschließend wird das Erntegut, ggf. unter weiterer Einwirkung durch die Haspel 10, mittels einer Einzugsschnecke 15 dem Schrägförderer 3 zugeführt. Bei einer Ausführung des Schneidwerks 2 als ein Bandschneidwerk sind mehrere Förderbänder vorgesehen, die das vom Messerbalken 12 abgeschnittene Erntegut aufnehmen und abfördern.

Hierfür ist die Einzugsschnecke 15 mit Blechen 16 ausgestattet, die beidseits eines mittleren Bereichs der Einzugsschnecke 15, der auch als "Einzugsbereich" bezeichnet wird, angeordnet sind. Dadurch wird das geschnittene Erntegut zunächst zum Einzugsbereich der Einzugsschnecke 15 und von dort zum Schrägförderer 3 transportiert. Im Einzugsbereich sind der Einzugsschnecke 15 mehrere Einzugsfinger 17 zugeordnet, die bezogen auf die Walzendrehung jeweils zyklisch in einem Ausfahrwinkel der Einzugsschnecke 15 aus der Einzugsschnecke 15 ausfahren und in einem Einfahrwinkel der Einzugsschnecke 15 In die Einzugsschnecke 15 einfahren. Das Einfahren der Einzugsfinger 17 ist erforderlich, um zu vermeiden, dass eingezogenes Erntegut vollständig um die Einzugsschnecke 15 herumläuft, ohne dem Schrägförderer 3 übergeben zu werden. Alle obigen Komponenten des Schneidwerks 2 sind an einem Trägerrahmen 18 angeordnet, der sich aus mehreren Rahmenteilen zusammensetzt.

Je nach Ausstattung erlaubt das Schneidwerk 2 die Einstellung verschiedener Schneidwerksparameter mittels entsprechender, hier nicht dargestellter Antriebe, die sich über das Fahrerassistenzsystem 4 ansteuern lassen.

Dem Messerbalken 12 beispielsweise sind der Schneidwerksparameter 2a "Messerbalkenhöhe" und der Schneidwerksparameter 2b "Schnittwinkel" zugeordnet, wie in Fig. 1 gezeigt ist. Dem in seiner Länge veränderlichen Schneidtisch 14 ist der Schneidwerksparameter 2c "Schneidtischlänge" zugeordnet. Der Haspel 10 sind der Schneidwerksparameter 2d "Horizontale Haspelposition" und der Schneidwerksparameter 2e "Vertikale Haspelposition" zugeordnet. Weiter bilden die Schneidwerksparameter "Drehzahl Einzugsschnecke", "Drehzahl Haspel" und "Schnittfrequenz" weitere Schneidwerksparameter, die sich vorzugsweise mittels des Fahrerassistenzsystems 4 einstellen lassen.

Die genannten Schneidwerksparameter 2a bis 2e haben nicht nur einen Einfluss auf die Funktion des Schneidwerks 2 im engeren Sinne, sondern auch auf die Funktion der nachgelagerten Arbeitsaggregate, hier auf die Funktion des Dreschwerks 9a, der Abscheideanordnung 9b und der Reinigungsanordnung 9c. Gegebenenfalls ist auch eine Häcksel- und Verteilanordnung 19 zum Häckseln des Strohs und der anschließenden Verteilung der Nichtkornbestandteile auf dem Feld zu berücksichtigen, die ebenfalls durch die Schneidwerksparameter des Schneidwerks 2 beeinflussbar ist.

In dem Speicher 5 des Fahrerassistenzsystems 4 ist ein funktionales Systemmodell 5b für zumindest einen Teil der Erntemaschine 1 hinterlegt, wobei die Recheneinheit 6 die oben angesprochene autonome Ermittlung des mindestens einen Schneidwerksparameters 2a bis 2e basierend auf dem Systemmodell 5b vornimmt. Bei dem funktionalen Systemmodell 5b handelt es sich um ein rechnerisches Modell zur Abbildung funktionaler Zusammenhänge innerhalb der Erntemaschine 1. Das Systemmodell 5b wird von der Recheneinheit 6 im laufenden Erntebetrieb auf den aktuellen Ernteprozesszustand abgeglichen. Der Begriff "Ernteprozesszustand" umfasst den Ernteprozess betreffenden Informationen. Dazu gehören Feldbestandsinformationen wie "Bestandsdichte", "Bestandshöhe", "Bestandsfeuchte", "Halmlänge" und "Lageranteil".

Es ist eine Sensoranordnung 20 zur Erfassung zumindest eines Teils des Ernteprozesszustands vorgesehen. Vorzugsweise ist die Sensoranordnung 20 mit mehreren Sensoren 21 ausgestattet. Beispielsweise weist die Sensoranordnung 20 einen Gutstromsensor 22 zur Erfassung des Erntegutstroms auf. Der Gutstromsensor 22 kann beispielsweise kamerabasiert ausgestaltet sein und Aufschluss über die Ernteprozessparameter "Gleichmäßigkeit Querverteilung Erntegutstrom" und/oder "zeitliche Varianz Erntegutstrom" geben. Alternativ oder zusätzlich kann die Sensoranordnung 20 einen Bestandssensor 23 zur Erfassung von Feldbestandsinformationen aufweisen. Alternativ oder zusätzlich zu der Erfassung des Ernteprozesszustands mittels einer Sensoranordnung 20 kann es auch vorgesehen sein, dass eine Ein-/Ausgabevorrichtung 24 dem Fahrerassistenzsystem 4 zugeordnet ist, wobei zumindest ein Teil des Ernteprozesszustands durch die Ein-/Ausgabevorrichtung 24 eingebbar ist. Dabei ist es vorzugsweise so, dass die Recheneinheit 6 Abfragen betreffend den aktuellen Ernteprozesszustand erzeugt und über die Ein-/Ausgabevorrichtung 24 ausgibt. Auf eine solche Abfrage hin kann die Bedienperson 7 zumindest einen Teil des Ernteprozesszustands über die Ein-/Ausgabevorrichtung 24 eingeben. Hierfür weist die Ein-/Ausgabevorrichtung 24 entsprechende Eingabeelemente 24a und Ausgabeelemente 24b auf.

Die von der Bedienperson 7 auswählbaren Ernteprozessstrategien 5a sind jeweils auf verschiedene Zielvorgaben gerichtet. So ist mindestens eine Ernteprozessstrategie 5a auf die Zielvorgabe der Einstellung oder der Optimierung mindestens eines Ernteprozessparameters wie "Schnittährenverluste", "Spritzkörnerverluste", "Gleichmäßigkeit Querverteilung Erntegutstrom", "zeitliche Varianz Erntegutstrom", "Abscheideverluste", "Reinigungsverluste" oder "Kraftstoffverbrauch" oder dergleichhen gerichtet. Die Umsetzung der Ernteprozessstrategie 5a soll dabei jeweils durch eine entsprechende Vorgabe von Schneidwerksparametern erfolgen.

Hauptfunktion des Schneidwerksautomaten 8 ist die Anpassung der Schneidwerksparameter an die wechselnden Feldbestandsinformationen. Darüber hinaus treten Ernteprozesssituation auf, die die von einer standardisierten Ernteprozesssituation, welche dem funktionalen Systemmodell 5b zugrunde liegt, abweichen.

Hier setzt nun die Erfindung an, die vorsieht, automatisiert auf eine Ernteprozesssituation auf einem zu bearbeitenden Feld 25 zu reagieren, wenn diese von einer standardisierten Ernteprozesssituation abweicht.

Hierzu wird erfindungsgemäß vorgeschlagen, dass bei der Ansteuerung des Schneidwerks 2 gemäß der zumindest einen ausgewählten Ernteprozessstrategie 5a durch den aktiven Schneidwerksautomaten 8 bei einer Detektion einer Ernteprozesssituation auf einem zu bearbeitenden Feld 25, in der eine von der zumindest einen Ernteprozessstrategie 5a abweichende Regelung erforderlich wird, die Ausführung der Ernteprozessstrategie 5a durch die Ausführung einer von in dem Speicher 6 hinterlegten Regelsequenzen 5c temporär übersteuert wird. Wesentlich für die Erfindung ist, dass eine für die spezifische Ernteprozesssituation von der zumindest einen ausgewählten Ernteprozessstrategie 5a abweichende Regelung automatisch angewandt wird, die in der jeweils dafür vorgesehenen Regelsequenz 5c hinterlegt sind, deren temporäre Ausführung in einer spezifischen Ernteprozesssituation zu einem optimaleren Ergebnis führt, als dies bei der Ausführung der zumindest einen ausgewählten Ernteprozessstrategie 5a der Fall wäre.

Um die Bedienperson 7 in einer solchen spezifischen Ernteprozesssituation zu entlasten und aus einer solchen spezifischen Ernteprozesssituation möglicherweise entstehende Gutstauungen oder Verluste präventiv zu vermeiden, analysiert der Schneidwerksautomat 8 die bestehende Ernteprozesssituation der Erntemaschine 1 und löst erforderlichenfalls die für die detektierte spezifische Ernteprozesssituation entsprechende Regelsequenz 5c aus. Dadurch werden von dem Schneidwerksautomaten 8 gemäß der zumindest einen ausgewählten Ernteprozessstrategie 5a vorgenommene Einstellungen von Schneidwerksparametern des Schneidwerks 2 temporär übersteuernd verstellt. Mit dem Erkennen, dass die die Übersteuerung auslösende Ernteprozesssituation der Erntemaschine 1 überwunden ist, greift wieder die ausgewählte Ernteprozessstrategie 5a mit ihren zuletzt gewählten Einstellungen.

Zur Detektion einer Ernteprozesssituation, welche die Ausführung einer der im Speicher 6 hinterlegten Regelsequenzen 5c bewirkt, werden Vorfeldinformationen und maschinenspezifische Parameter durch zumindest eine weitere Sensoranordnung 28 erfasst. Bevorzugt können als Vorfeldinformationen eine Bestandhöhe, eine Bestandskante, ein Erreichen des Feldbestands 26 bei einer Bestandseinfahrt und ein Verlassen des Feldbestandes 26 bei einer Bestandsausfahrt bestimmt und als maschinenspezifische Parameter eine eingestellte Schneidwerkshöhe, eine Schichthöhe im Schrägförderer 3, ein Lenkwinkel, eine Fahrgeschwindigkeit sowie ein eingestellter Lenkmodus zur Spurführung mittels weiterer Sensorsysteme durch das Fahrerassistenzsystem 4 erfasst werden.

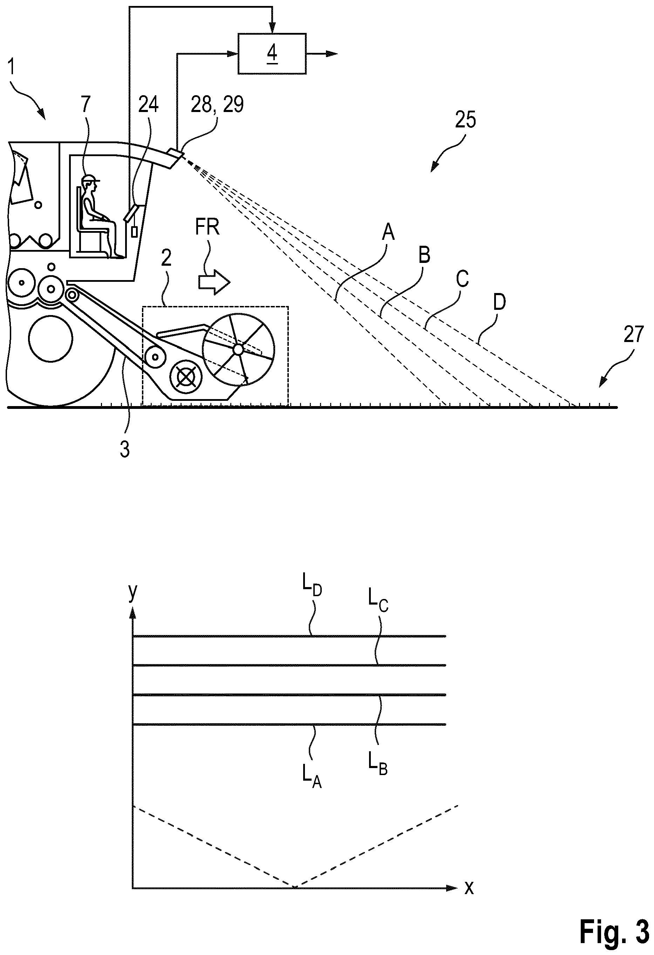

In Fig. 3 ist die Erntemaschine 1 in einer Seitenansicht im abgeernteten Feldbestand 27 des Feldes 25 gezeigt, welche sich in Fahrtrichtung FR bewegt. Das Fahrerassistenzsystem 4 weist eine weitere Sensoranordnung 28 zur Erzeugung von Vorfeldinformationen, d.h. Informationen über einen in Fahrtrichtung FR der Erntemaschine 1 gesehen vorausgehenden Vorfeldbereich auf. Die Sensoranordnung 28 weist ein laserbasiertes Sensorsystem 29, beispielsweise ein auf einem LiDAR-Sensor basierendes Sensorsystem, und gegebenenfalls ein optionales kamerabasiertes Sensorsystem auf, die beide jeweils an der Erntemaschine 1 in einer gegenüber der Feldebene erhöhten Position, hier am Kabinendach der Erntemaschine 1, angeordnet sind.

Das laserbasierte Sensorsystem 29 ist zur Erzeugung von Abstandsinformationen zu einem vorbestimmten, relevanten Vorfeldbereich des Feldes 25, in welchem sich ein stehender Feldbestand 26 oder, wie in Fig. 3 angedeutet, ein abgeernteter Feldbestand 27, auch als Stoppelfeld bezeichnet, befindet, eingerichtet. Das laserbasierte Sensorsystem 29 der Erntemaschine 1 tastet den Vorfeldbereich mit in mehreren Scan-Ebenen A, B, C, D verlaufenden elektromagnetischen Sendestrahlen ab, wobei von dem laserbasierten Sensorsystem 29 für die Scan-Ebenen A, B, C, D aus den Abstandsinformationen jeweils eine Auftrefflinie L_{A}, L_{B}, L_{C}, L_{D} errechnet wird. Die Darstellung von nur vier Scan-Ebenen A, B, C, D ist beispielhaft zu verstehen. Grundsätzlich kann die Anzahl der Scan-Ebenen höher sein, wodurch die Genauigkeit der Abtastung verbessert wird.

Aus der Anordnung und/oder der Formgebung der den unterschiedlichen Scan-Ebenen A, B, C, D zugeordneten Auftrefflinien L_{A}, L_{B}, L_{C}, L_{D} wird auf die dreidimensionale Beschaffenheit des Vorfeldbereichs geschlossen. Die unterschiedlichen Abstände zwischen den Auftrefflinien L_{A}, L_{B}, L_{C}, L_{D} aufeinanderfolgender Scan-Ebenen A, B, C, D ergeben sich dadurch, dass die Scan-Ebenen A, B, C, D vorzugsweise so ausgerichtet sind, dass sie in einem relativ flachen Winkel auf die Feldebene oder die horizontale Hüllfläche stehenden Feldbestands 26 treffen. Deshalb spreizen sich bei abgeerntetem Feldbestand 27 die Scan-Ebenen A, B, C, D weiter auf als dies bei stehendem Feldbestand 26 der Fall ist, da bei stehendem Feldbestand 26 die Entfernung von dem Punkt, von dem die Sendestrahlen ausgesendet werden, zur abgetasteten Hüllfläche kürzer als zur Feldebene ist. Mittels des laserbasierten Sensorsystems 29 kann im Vorfeldbereich abgeernteter Feldbestand 27, stehender Feldbestand 26, ein Übergang vom stehenden Feldbestand 26 ins Vorgewende oder vom Vorgewende in einen stehenden Feldbestand 26 erkennt werden. Hinsichtlich der detaillierten Funktionsweise des in Rede stehenden laserbasierten Sensorsystems 29 darf auf die DE 10 2019 112 584 A1 verwiesen werden, die auf die Anmelderin zurückgeht und deren Inhalt insoweit zum Gegenstand der vorliegenden Anmeldung gemacht wird.

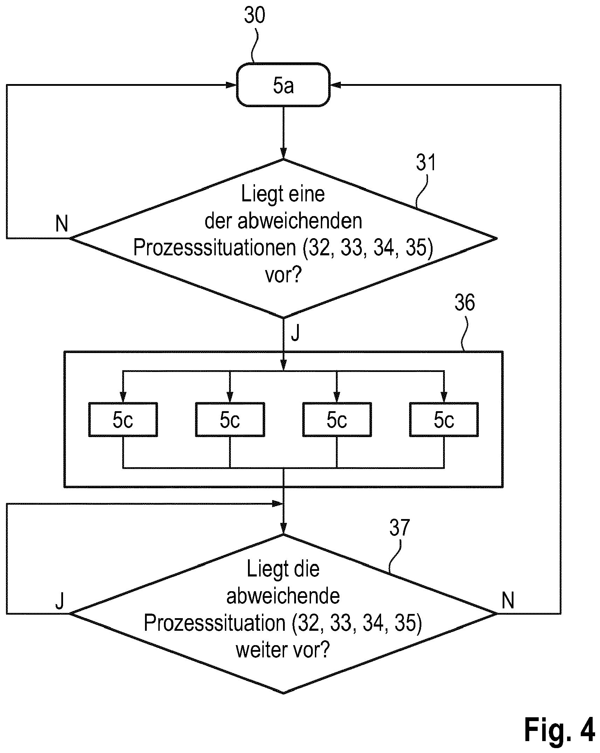

In Fig. 4 ist ein vereinfachtes Flussdiagramm zur Veranschaulichung des vorschlagsgemäßen Verfahrens dargestellt. Ausgangspunkt ist im Verfahrensschritt 30 die zumindest eine durch die Bedienperson 7 ausgewählte Ernteprozessstrategie 5a.

Im Verfahrensschritt 31 werden die von der Sensoranordnung 28 bereitgestellten Vorfeldinformationen durch das Fahrerassistenzsystem 4 ausgewertet. Die Auswertung dient dazu, das Vorliegen einer abweichenden Ernteprozesssituation zu bestimmen, bei der es sich um eine Bestandseinfahrt 32, eine Fahrt mit einer Spritzspur 33, eine Bestandsausfahrt 34 oder eine Fahrt im Vorgewende 35 handelt. Wird in dem Verfahrensschritt 31 keine abweichende Ernteprozesssituation durch die Sensoranordnung 28 detektiert, wird die Regelung des Schneidwerks 2 durch den Schneidwerksautomaten 8 unverändert gemäß der zumindest einen ausgewählten Ernteprozessstrategie 5a fortgeführt. Bejahendenfalls wird zum Verfahrensschritt 36 übergegangen.

Im Verfahrensschritt 36 wird entsprechend der vorliegenden abweichenden Ernteprozesssituation die Regelsequenz 5c ausgewählt, welche der jeweiligen detektieren, abweichenden Ernteprozesssituation, Bestandseinfahrt 32, Fahrt mit einer Spritzspur 33, Bestandsausfahrt 34 oder Fahrt im Vorgewende 35, entspricht. Die Unterscheidung zwischen den einzelnen Ernteprozesssituation Bestandseinfahrt 32, Fahrt mit einer Spritzspur 33, Bestandsausfahrt 34 oder Fahrt im Vorgewende 35 berücksichtigt die zu ergreifenden Maßnahmen, zur übersteuernden Einstellung des Schneidwerks 2 bzw. dessen Aggregaten Haspel 10 sowie Schneidtisch 14 oder Förderbändern im Fall eines als Bandschneidwerk ausgeführten Schneidwerks 2.

Bei der Detektion der Ernteprozesssituation Bestandseinfahrt 32 wird eine Regelsequenz 5c ausgeführt, durch welche abweichend von der Einstellung durch den Schneidwerksautomaten 8 gemäß der zumindest einen ausgewählten Ernteprozessstrategie 5a der Schneidwerksparameter "vertikale Haspelposition" 2e angesteuert wird, um die Haspel 10 tiefer zu stellen.

Bei der Detektion der Ernteprozesssituation Fahrt mit einer Spritzspur 33 im stehenden Feldbestand 26 wird eine Regelsequenz 5c ausgeführt wird, durch welche abweichend von den Einstellungen durch den Schneidwerksautomaten 8 gemäß der zumindest einen ausgewählten Ernteprozessstrategie 5a die Schneidwerksparameter "vertikale Haspelposition" 2e und "Schneidtischlänge" 2c angesteuert werden, um die Haspel 10 zyklisch tiefer zu stellen und zugleich die Ausfahrlänge des Schneidtisches 14 zu reduzieren.

Bei der Detektion der Ernteprozesssituation Bestandsausfahrt 34 wird eine Regelsequenz 5c ausgeführt wird, durch welche abweichend von der Einstellung durch den Schneidwerksautomaten 8 gemäß der zumindest einen ausgewählten Ernteprozessstrategie 5a der Schneidwerksparameter "vertikale Haspelposition" 2e angesteuert wird, um die Haspel 10 abzusenken.

Bei der Detektion der Ernteprozesssituation Fahrt im Vorgewende 35 wird eine Regelsequenz 5c ausgeführt wird, durch welche abweichend von den Einstellungen durch den Schneidwerksautomaten 8 gemäß der zumindest einen ausgewählten Ernteprozessstrategie 5a die Schneidwerksparameter "horizontale Haspelposition" 2d und "Schneidtischlänge" 2c angesteuert werden, um die Haspel 10 abzusenken und anschließend die Ausfahrlänge der Haspel 10 zeitgleich mit der Ausfahrlänge des Schneidtisches 14 zu verringern.

Die entsprechend der jeweiligen Regelsequenz 5c durchgeführte Übersteuerung der zumindest einen von der Bedienperson 7 ausgewählten Ernteprozessstrategie 5a endet, sobald im Verfahrensschritt 37 detektiert wird, dass die abweichende Ernteprozesssituation, Bestandseinfahrt 32, Fahrt mit einer Spritzspur 33, Bestandsausfahrt 34 oder Fahrt im Vorgewende 35, weiterhin vorliegt oder nicht mehr besteht. Wie zum Verfahrensschritt 31 bereits ausgeführt, werden die von der Sensoranordnung 28 bereitgestellten Vorfeldinformationen durch das Fahrerassistenzsystem 4 ausgewertet, um das Andauern der detektierten abweichenden Ernteprozesssituation 32, 33, 34 oder 35 oder deren Ende zu bestimmen. Wird im Verfahrensschritt 37 bestimmt, dass die abweichende Ernteprozesssituation weiterhin vorliegt, wird bleibt die Regelsequenz 5c aktiv, d.h. die temporäre Übersteuerung wird fortgesetzt. Wird hingegen im Verfahrensschritt 37 bestimmt, dass die abweichende Ernteprozesssituation beendet wurde, d.h. die Erntemaschine 1 ist wieder in den stehenden Feldbestand 26 eingefahren, wird die Übersteuerung beendet. Der Schneidwerksautomat 8 regelt die Schneidwerksparameter wieder gemäß der von der Bedienperson 7 ausgewählten Ernteprozessstrategie 5a.

### Bezugszeichenliste

| | | | |
|---|---|---|---|
| 1 | Erntemaschine | 22 | Gutstromsensor |
| 2 | Schneidwerk | 23 | Bestandssensor |
| 2a | Messerbalkenhöhe | 24 | Ein-/Ausgabevorrichtung |
| 2b | Schnittwinkel | 24a | Eingabeelement |
| 2c | Schneidtischlänge | 24b | Ausgabeelement |
| 2d | Horizontale Haspelposition | 25 | Abzuerntendes Feld |
| 2e | Vertikale Haspelposition | 26 | Stehender Feldbestand |
| 3 | Schrägförderer | 27 | Abgeernteter Feldbestand |
| 4 | Fahrerassistenzsystem | 28 | Sensoranordnung |
| 5 | Speicher | 29 | Laserbasiertes Sensorsystem |
| 5a | Ernteprozessstrategie | 30 | Verfahrensschritt |
| 5b | Systemmodell | 31 | Verfahrensschritt |
| 5c | Regelsequenz | 32 | Bestandseinfahrt |
| 6 | Recheneinheit | 33 | Fahrt mit einer Spritzspur |
| 7 | Bedienperson | 34 | Bestandsausfahrt |
| 8 | Schneidwerksautomat | 35 | Fahrt im Vorgewende |
| 9a | Dreschwerk | 36 | Verfahrensschritt |
| 9b | Abscheideanordnung | 37 | Verfahrensschritt |
| 9c | Reinigungsanordnung | A-D | Scan-Ebenen |
| 9d | Kornelevator | FR | Fahrtrichtung |
| 9e | Korntank | L_{A} - L_{D} | Auftrefflinien |
| 10 | Haspel | | |
| 11 | Zinken | | |
| 12 | Messerbalken | | |
| 13 | Messer | | |
| 14 | Schneidtisch | | |
| 15 | Einzugsschnecke | | |
| 16 | Blech | | |
| 17 | Einzugsfinger | | |
| 18 | Trägerrahmen | | |
| 19 | Häcksel- und Verteilanordnung | | |
| 20 | Sensoranordnung | | |
| 21 | Sensor | | |

## Patentansprüche

1. Verfahren für den Betrieb einer selbstfahrenden landwirtschaftlichen Erntemaschine (1) mit einem Schneidwerk (2) zum Schneiden und Aufnehmen von Erntegut, wobei ein der Erntemaschine (1) zugeordnetes Fahrerassistenzsystem (4) mit einem Speicher (5) zum Hinterlegen von Daten und einer Recheneinheit (6) zur Verarbeitung von im Speicher (5) hinterlegten Daten verwendet wird, wobei das Fahrerassistenzsystem (4) zusammen mit dem Schneidwerk (2) einen Schneidwerksautomaten (8) bildet, indem aus mehreren in dem Speicher (5) hinterlegten Ernteprozessstrategien (5a) zumindest eine Ernteprozessstrategie (5a) ausgewählt wird und durch die Recheneinheit (6) zur Umsetzung der zumindest einen ausgewählten Ernteprozessstrategie (5a) mindestens einen Schneidwerksparameter (2a - 2e) autonom ermittelt und dem Schneidwerk (1) vorgeben wird, **dadurch gekennzeichnet, dass** bei der Ansteuerung des Schneidwerks (1) gemäß der zumindest einen ausgewählten Ernteprozessstrategie (5a) durch den aktiven Schneidwerksautomaten (8) bei einer Detektion einer Ernteprozesssituation auf einem zu bearbeitenden Feld (25), in der eine von der zumindest einen Ernteprozessstrategie (5a) abweichende Regelung erforderlich wird, die Ausführung der Ernteprozessstrategie (5a) durch die Ausführung von einer in dem Speicher (5) hinterlegten Regelsequenzen (5c) temporär übersteuert wird.

2. Verfahren nach Anspruch 1, **dadurch gekennzeichnet, dass** als eine Ernteprozesssituation eine Bestandseinfahrt (32), eine Fahrt mit einer Spritzspur (33), eine Bestandsausfahrt (34) oder eine Fahrt im Vorgewende (35) detektiert werden.

3. Verfahren nach Anspruch 1 oder 2, **dadurch gekennzeichnet, dass** durch den Schneidwerksautomaten (8) Haspel (10), Messerbalken (12), Schneidtisch (14), Einzugsschnecke (15) und/oder Förderbänder als Komponenten des Schneidwerks (1) durch Einstellung der zugehörigen Schneidwerksparameter (2a) "Messerbalkenhöhe", (2b) "Schnittwinkel", (2c) "Schneidtischlänge", (2d) "horizontale Haspelposition", (2e) "vertikale Haspelposition" "Drehzahl Haspel", "Schnittfrequenz", "Bandgeschwindigkeit" angesteuert werden.

4. Verfahren nach Anspruch 3, **dadurch gekennzeichnet, dass** bei der Ernteprozesssituation Bestandseinfahrt (32) eine Regelsequenz (5c) ausgeführt wird, durch welche abweichend von der Einstellung durch den Schneidwerksautomaten (8) gemäß der zumindest einen ausgewählten Ernteprozessstrategie (5a) der Schneidwerksparameter "vertikale Haspelposition" (2e) angesteuert wird, um die Haspel (10) tiefer zu stellen.

5. Verfahren nach Anspruch 3 oder 4, **dadurch gekennzeichnet, dass** bei der Ernteprozesssituation Fahrt mit einer Spritzspur (33) eine Regelsequenz (5c) ausgeführt wird, durch welche abweichend von den Einstellungen durch den Schneidwerksautomaten (8) gemäß der zumindest einen Ernteprozessstrategie (5a) die Schneidwerksparameter "vertikale Haspelposition" (2e) und "Schneidtischlänge" (2c) angesteuert werden, um die Haspel (10) zyklisch tiefer zu stellen und zugleich die Ausfahrlänge des Schneidtisches (14) zu reduzieren.

6. Verfahren nach einem der Ansprüche 3 bis 5, **dadurch gekennzeichnet, dass** bei der Ernteprozesssituation Bestandsausfahrt (34) eine Regelsequenz (5c) ausgeführt wird, durch welche abweichend von der Einstellung durch den Schneidwerksautomaten (8) gemäß der zumindest einen ausgewählten Ernteprozessstrategie (5a) der Schneidwerksparameter "vertikale Haspelposition" (2e) angesteuert wird, um die Haspel (10) abzusenken.

7. Verfahren nach einem der Ansprüche 3 bis 6, **dadurch gekennzeichnet, dass** bei der Ernteprozesssituation Fahrt im Vorgewende (35) eine Regelsequenz (5c) ausgeführt wird, durch welche abweichend von den Einstellungen durch den Schneidwerksautomaten (8) gemäß der zumindest einen Ernteprozessstrategie (5a) die Schneidwerksparameter "horizontale Haspelposition" (2d) und "Schneidtischlänge" (2c) angesteuert werden, um die Haspel (10) abzusenken und anschließend die Ausfahrlänge der Haspel (10) zeitgleich mit der Ausfahrlänge des Schneidtisches (14) zu verringern.

8. Verfahren nach einem der vorangehenden Ansprüche, **dadurch gekennzeichnet, dass** zur Detektion einer Ernteprozesssituation, welche die Ausführung einer der Regelsequenzen (5c) bewirkt, Vorfeldinformationen und maschinenspezifische Parameter durch zumindest eine Sensoranordnung (28) erfasst werden.

9. Verfahren nach Anspruch 8, **dadurch gekennzeichnet, dass** als Vorfeldinformationen eine Bestandhöhe, eine Bestandskante, ein Erreichen des stehenden Feldbestands (26) bei der Bestandseinfahrt (32) und ein Verlassen des stehenden Feldbestandes (26) bei der Bestandsausfahrt (34) bestimmt werden und als maschinenspezifische Parameter eine eingestellte Schneidwerkshöhe, eine Schichthöhe in einer dem Schneidwerk nachgeordneten Fördervorrichtung (3), ein Lenkwinkel, eine Fahrgeschwindigkeit sowie ein eingestellter Lenkmodus zur Spurführung durch das Fahrerassistenzsystem (4) erfasst werden.

10. Verfahren nach Anspruch 9, **dadurch gekennzeichnet, dass** zur Steuerung oder Regelung der Spurführung im jeweiligen Lenkmodus die Bestandskante oder eine Spritzspur als Regelgröße verwendet wird.

11. Verfahren nach einem der Ansprüche 8 bis 10, **dadurch gekennzeichnet, dass** das Fahrerassistenzsystem (4) eine Sensoranordnung (28) zur Erzeugung von Vorfeldinformationen aufweist, wobei die Sensoranordnung (28) ein laserbasiertes Sensorsystem (29) aufweist, das zur Erzeugung von Abstandsinformationen zu einem vorbestimmten, relevanten Vorfeldbereich der Erntemaschine (1) den Vorfeldbereich mit in mehreren Scan-Ebenen (A, B, C, D) verlaufenden elektromagnetischen Sendestrahlen abtastet, wobei von dem laserbasierten Sensorsystem (6) für die Scan-Ebenen (A, B, C, D) aus den Abstandsinformationen jeweils eine Auftrefflinie (L_{A}, L_{B}, L_{C}, L_{D}) errechnet wird und aus der Anordnung und/oder Formgebung der den Scan-Ebenen (A, B, C, D) zugeordneten Auftrefflinien (L_{A}, L_{B}, L_{C}, L_{D}) auf die dreidimensionale Beschaffenheit des Vorfeldbereichs geschlossen wird.

12. Verfahren nach Anspruch 11, **dadurch gekennzeichnet, dass** das laserbasierte Sensorsystem (29) im Vorfeldbereich abgeernteten Feldbestand (27), stehenden Feldbestand (26), einen Übergang vom stehenden Feldbestand (26) ins Vorgewende oder vom Vorgewende in einen stehenden Feldbestand (26) erkennt.

13. Verfahren nach einem der vorangehenden Ansprüche, **dadurch gekennzeichnet, dass** durch die ausgeführte Regelsequenz (5c) mehrere Arbeitsaggregate der Erntemaschine (1) angesteuert werden.

14. Selbstfahrende landwirtschaftliche Erntemaschine (1) mit einem Schneidwerk (2) zum Schneiden und Aufnehmen von Erntegut und mit einem Fahrerassistenzsystem (4), welches einen Speicher (5) zum Hinterlegen von Daten und eine Recheneinheit (6) zur Verarbeitung von im Speicher (5) hinterlegten Daten aufweist, wobei das Fahrerassistenzsystem (4) zusammen mit dem Schneidwerk (2) einen Schneidwerksautomaten (8) bildet, indem durch Auswahl zumindest einer Ernteprozessstrategie (5a) aus mehreren in dem Speicher (5) hinterlegten Ernteprozessstrategien (5a) und durch die Recheneinheit (6), die dazu eingerichtet ist, zur Umsetzung der zumindest einen ausgewählten Ernteprozessstrategie (5a) mindestens einen Schneidwerksparameter (2a - 2e) autonom zu ermitteln und dem Schneidwerk (2) vorzugeben, **dadurch gekennzeichnet, dass** die Recheneinheit (6) dazu eingerichtet ist, bei der Ausführung der zumindest einen ausgewählten Ernteprozessstrategie (5a) durch den aktiven Schneidwerksautomaten (8) bei einer Detektion einer Ernteprozesssituation auf einem zu bearbeitenden Feld (25), in der eine von der zumindest einen ausgewählten Ernteprozessstrategie (5a) abweichende Regelung erforderlich ist, die Ausführung der Ernteprozessstrategie (5a) durch die Ausführung von einer in dem Speicher (5) hinterlegten Regelsequenzen (5a) temporär zu übersteuern.

15. Erntemaschine (1) nach Anspruch 14, **dadurch gekennzeichnet, dass** diese zur Durchführung des Verfahrens nach einem der Ansprüche 1 bis 13 eingerichtet ist.
